# EUROPÄISCHE PATENTSCHRIFT

(11) **EP 2 667 998 B1**
(45) Veröffentlichungstag und Bekanntmachung des Hinweises auf die Patenterteilung: **18.11.2020**
(21) Anmeldenummer: 12701177.3
(22) Anmeldetag: 10.01.2012
(51) Int. Cl.: B23K 26/04

(54) **LASERBEARBEITUNGSMASCHINE SOWIE VERFAHREN ZUM ZENTRIEREN EINES FOKUSSIERTEN LASERSTRAHLES**
LASER PROCESSING MACHINE AND METHOD FOR CENTERING A FOCUSED LASER BEAM
MACHINE DE TRAITEMENT AU LASER AINSI QUE PROCÉDÉ PERMETTANT DE CENTRER UN FAISCEAU FOCALISÉ

(30) Priorität: 27.01.2011 EP 11152317; 27.01.2011 US 201161436717 P
(43) Veröffentlichungstag der Anmeldung: 04.12.2013
(73) Patentinhaber: Bystronic Laser AG, 3362 Niederönz (CH)
(72) Erfinder: RAUSCHENBACH, Sven, Lotzwil 4932 (CH); BEUTLER, Beat, Oberönz 3363 (CH); CATHRY, Daniel, Röthenbach 3373 (CH)
(74) Vertreter: Schwarz und Baldus Patentanwälte
(86) Internationale Anmeldenummer: PCT/IB2012/050119
(87) Internationale Veröffentlichungsnummer: WO 2012/101533

(56) Entgegenhaltungen:
- EP-A1- 0 597 771
- WO-A1-2008/052591
- DE-A1-102007 013 623
- DE-A1-102007 048 471
- US-B1- 6 670 574

## Beschreibung

Die Erfindung betrifft eine Laserbearbeitungsmaschine nach dem Oberbegriff des Anspruchs 1, sowie ein Verfahren zum Zentrieren eines fokussierten Laserarbeitsstrahles bei einer solchen Laserbearbeitungsmaschine nach Anspruch 9.

Wie bekannt, soll der Laserstrahl für einen Schneidprozess bei Laserschneidmaschinen möglichst zentrisch durch die Schneiddüse des Schneidkopfes geführt werden. Da eine laterale Verschiebung der optischen Linsen im Schneidkopf - verursacht durch einen Wechsel der Linse oder des Linseneinschubes - oft eine Verschiebung der optischen Achse zur Folge haben kann, ist ein wiederholter Zentrierungsprozess der Schneiddüse in der Praxis notwendig.

Bisher wird das Zentrieren der Düse relativ zum Laserstrahl in der Praxis meistens manuell durchgeführt. Die Düse wird dabei so zentriert, dass man den Düsenkopf gegenüber dem Düsenkörper in X-Y-Richtungen durch Stellschrauben justiert und dann fixiert. Dies wird mittels visueller Kontrolle durchgeführt, wobei ein durchsichtiges Klebeband auf die Düse geklebt und ein Laserpuls ausgelöst wird. Das dadurch entstandene Loch sollte in der Mitte der Düsenbohrung sein. Falls dies nicht der Fall ist, soll dann die Düse relativ zum Laserstrahl manuell verschoben werden. Dieses Vorgehen wiederholt sich solange, bis die Düse exakt zentriert ist.

Es gibt auch Zentrierverfahren, bei denen nicht die Düse relativ zum Strahl verstellt wird, sondern die Linse zur Fokussierung des Laserstrahls relativ zur Düse verstellt wird. Die obigen Verfahren haben jedoch folgende Nachteile:
- Infolge der manuellen Eingriffe und der visuellen Beurteilung dauert das Zentrieren zu lange und erfordert Übung, das exakte visuelle Beurteilen erfordert eine gute Sehschärfe;
- Die visuelle Interpretation wird von allen Personen ungleich gemacht; dies erhöht weiter die Ungenauigkeit;
- Der Laserimpuls wird meistens mit einer geringen Leistung von (z.B. <100 Watt) erzeugt, damit das Klebeband nicht vollständig verbrennt. Dies entspricht nicht dem wirklichen Schneidzustand, der jeweils mit einer Leistung im Kilowatt (KW) Bereich durchgeführt wird. Auch dies führt zu Ungenauigkeiten. Aus der JP-10249566 ist eine Lasermaschine für Behandlungen des menschlichen Körpers bekannt, bei welcher die Lumineszenz des axialen Zentrums des Laserstrahles von einem photoelektrischen Sensor im Bereich der Fokussierlinse im Bearbeitungskopf wahrgenommen wird. Weicht der IST-Wert des Sensors von einem Sollwert ab, wird dann die Düse relativ zum Laserstrahl durch eine Vorrichtung verstellt. Ein exaktes und reproduzierbares Zentrieren zum Bearbeiten von Werkstücken hoher Qualitätsansprüche durch die oben vorgeschlagene Lumineszenzmessung ist kaum vorstellbar.

JP-56'041 '092 (A) offenbart ein Laserschweißgerät, dessen Düse mit äußeren Temperatursensoren versehen ist. Es ist ferner mit einer Ausrichtvorrichtung zu maschineller Verstellung der Düsenposition relativ zum Laserstrahl in Abhängigkeit von Messsignalen äußerer Temperatursensoren ausgerüstet. Fällt die Laserstrahlachse mit der Düsenachse nicht zusammen, dann messen die Temperatursensoren verschiedene Temperaturen und geben verschiedene Temperatursignale zur Ausrichtvorrichtung. Die Temperaturdifferenzen werden für die Düse mithilfe einer Antriebseinheit der Ausrichtvorrichtung durch die Zentrierung minimalisiert.

Es ist aber beim obigen bekannten Gerät problematisch, dass die Temperatursensoren nach dem Stand der Technik den modernsten Anforderungen kaum entsprechen können, da diese Temperatursensoren üblicherweise Termopiles, welche eine Zeitkonstante von max. 20 ms aufweisen, zu träge sind und ein solches Zentrieren daher eine relativ lange Zeit braucht. Dazu kommt, dass die von den äußeren Temperatursensoren erfassten Temperaturwerte durch die vom Werkstück abgestrahlte und/oder reflektierte Wärmestrahlung beeinflusst werden. Unter solchen Umständen ist ein exaktes und reproduzierbares Zentrieren praktisch kaum möglich. Andererseits ist im unzentrierten Zustand der Düse - d.h. auch während des Zentrierungsprozesses - für den Fall, dass Messungen mit den oben angegebenen trägen Temperatursensoren erfolgen - eine längere Zeit mit zu hohen Wärmebelastungen an der Düse (allenfalls sogar mit Materialabtrag an der Düse) zu rechnen, was unerwünscht ist.

Aus der DE-102007048471 (A1) ist ein Verfahren zum Bestimmen der Lage eines durch eine Düsenöffnung einer Laserbearbeitungsdüse hindurch tretenden Laserstrahls relativ zur Öffnung bekannt. Dabei wird der Düsenkörper und der Laserstrahl relativ zueinander entlang der Ausbreitungsrichtung (Z) des Laserstrahls bewegt, bis - infolge der kegeligen Ausbreitung des Laserstrahls - ein Teil der Laserstrahlung aus einem Randbereich des Laserstrahls an einer die Öffnung umgebenden speziellen optischen Streu- oder Spiegelfläche abgestreift wird. Danach wird die Intensität der von der Streu- oder Spiegelfläche reflektierten und gestreuten Laserstrahlung gleichzeitig an einer Mehrzahl von Messflächen detektiert und die an der Mehrzahl von Messflächen detektierten Intensität der Laserstrahlung zum Bestimmen der Lage des Laserstrahls relativ zur Düsenöffnung verglichen. Der abgestreifte Teil der Laserstrahlung wird demnach an der Streufläche diffus gestreut oder an der in radialer Richtung eine Krümmung aufweisenden Spiegelfläche oder der kombinierten Streufläche reflektierte Laserstrahlung aufgeweitet oder fokussiert. In der obigen DE-A ist auch eine Laserbearbeitungsdüse offenbart, welche einen Düsenkörper mit einer Düsenöffnung zum Durchtritt eines fokussierten Laserstrahls, sowie eine die Öffnung umgebende, an dem Düsenkörper gebildete Spiegelfläche oder kombinierten Streu-/Spiegelfläche zum Abstreifen eines Teils des Laserstrahlung aus einem Randbereich des Laserstrahls aufweist. Dabei hat die Spiegelfläche oder die kombinierte Streu-/Spiegelfläche in radialer Richtung eine Krümmung.

Gemäss der obigen Technologie werden zum Abstreifen eines Teillaserstrahlung und zum Aufweiten oder Fokussieren der reflektierten Teillaserstrahlung eine an dem Düsenkörper gebildete Spiegelfläche oder kombinierte Streu-/Spiegelfläche mit radialer Krümmung verwendet, was also mehrere komplizierte optische Massnahmen benötigt. Verunreinigungen an den Spiegelflächen führen gegebenenfalls zur Zerstörung der in unmittelbarer Düsennähe ungeschützten Spiegelflächen, da sie dann nicht mehr spiegeln oder jedenfalls zu einer Verfälschung des Messergebnisses, das gemäß diesem Stand der Technik aus einem gleichzeitig zusammengesetzten Messergebnis an allen Sensoren besteht. DE-102007013623 (gleicher Anmelderin wie bei der DE-102007048471) beschreibt ferner eine Einrichtung und ein Verfahren zum Ausrichten eines in Z-Richtung propagierenden Laserstrahls durch eine in X- Y-Ebene definierte Düsenbohrung einer Laserbearbeitungsdüse auf einem Laserbearbeitungskopf, umfassend die Schritte:
- Aktivieren des Laserstrahls mit einer definierten Energie;
- Verfahren des Laserstrahls entlang einer ersten Linie in der X- Y-Ebene;
- Messung der Strahlung vor der Düsenbohrung;
- Ermittlung von ersten zwei Randpunkten auf der ersten Linie, die am Rand der Düsenbohrung liegen, durch die Auswertung der gemessenen Strahlung;
- Bestimmung eines ersten Zielpunktes zwischen den beiden ersten Randpunkten auf der ersten Linie und Ausrichtung des Laserstrahls auf diesen ersten Zielpunkt.

Die Einrichtung weist Sensoren zur Erfassung von einem vom Laserstrahl durch die Laserbearbeitungsdüse reflektierten Laserstrahlungsanteil auf.

Bei dieser Zentrierungstechnologie soll also der Laserstrahl in der X-Y-Ebene zuerst entlang einer ersten Linie und danach entlang einer zweiten Linie bewegt werden, was jedoch aufgrund der dort geforderten komplizierten optischen Bedingungen hinsichtlich der verlangten Streuung des Laserstrahls an speziellen optischen Streuflächen aufwendig ist und spezielle Massnahmen benötigt.

Die Druckschrift DE 10 2007 013623 A1 betrifft ein Verfahren und eine Vorrichtung zum Ausrichten eines Laserstrahls, insbesondere eines in z-Richtung propagierenden Laserstrahls durch eine in x-y-Ebene definierte Düsenbohrung, insbesondere in einer Laserbearbeitungsdüse auf einem Laserbearbeitungskopf.

Die Druckschrift EP 0 597 771 A1 betrifft eine Vorrichtung mit einem Abtast- und Detektionsmittel, die vorgesehen sind, um einen Teil des Lichtstrahls entlang eines Kreises abzutasten, dessen Achse die Arbeitsachse ist.

Die Druckschrift WO 2008/052591 A1 betrifft ein Verfahren zur Überwachung eines Bearbeitungsbereichs eines Werkstücks, an dem eine Laserbearbeitung durchgeführt wird, bei dem die von dem Bearbeitungsbereich emittierte Strahlung durch ein Detektorsystem ortsaufgelöst erfasst wird und eine Vorrichtung zur Überwachung einer Laserbearbeitung eines Werkstücks, mit einer Filteranordnung und einem Detektorsystem.

Die Druckschrift US 6,670,574 B1 betrifft ein Laserschweißüberwachungssystem, das in der Lage ist, eine Schweißqualität eines Schweißens unter Verwendung eines gepulsten Lasers zu bewerten.

Aufgabe der vorliegenden Erfindung ist es somit, eine verbesserte Laserbearbeitungsmaschine und ein verbessertes Zentrierverfahren zu schaffen, durch welche die oben erwähnten Nachteile des Standes der Technik reduziert bzw. eliminiert werden kann. Durch das wiederholbare Zentrieren des Laserbearbeitungsstrahls innerhalb der Düsenbohrung des Laserbearbeitungskopfs mit einfacheren Mitteln ohne besondere optische Massnahmen wie Spiegel oder Aufweitungsoptiken o.dgl. für den Laserstrahl und dadurch, dass es automatisiert durchgeführt werden kann, soll gleichzeitig die Arbeitsqualität der Maschine erhöht werden.

Die Aufgabe wird durch einen Gegenstand mit den Merkmalen nach den unabhängigen Ansprüchen 1 und 9 gelöst. Vorteilhafte Weiterbildungen sind in den abhängigen Patentansprüchen dargelegt.

Die erfindungsgemäße Laserbearbeitungsmaschine ging also von dem oben erörterten Stand der Technik, d.h. von einer Laserbearbeitungsmaschine aus, welche mit wenigstens einem Laserbearbeitungskopf ausgestattet ist, welcher einen Innenraum und eine Laserbearbeitungsdüse mit einer Düsenöffnung zum Richten eines fokussierten Laserarbeitsstrahles auf ein zu bearbeitendes Werkstück aufweist. Die Maschine hat auch eine Ausrichtvorrichtung zum Zentrieren des fokussierten Laserarbeitsstrahles relativ zur Düsenöffnung, welche mit mehreren Sensoren versehen ist.

Das Wesen der erfindungsgemäßen Laserbearbeitungsmaschine wird darin gesehen, dass für den Fall mangelnder Zentrierung der Düsenöffnung relativ zum fokussierten Laserarbeitsstrahl (erster elektromagnetischer Energiestrahl) im Bereich der Düsenöffnung mindestens eine innere Umwandlungseinheit, insbesondere eine Umwandlungskante zur Umwandlung des fokussierten Laserarbeitsstrahles in sekundäre elektromagnetische Wärmestrahlung zur Detektion in innenliegenden Wärmestrahlungssensoren vorgesehen ist. Dabei sind die Wärmestrahlungssensoren im Inneren der Düse oder im Inneren des Düsenhalters bzw. des Arbeitskopfs angeordnet, um die sekundäre (elektromagnetische) Wärmestrahlung zu detektieren.

Die Wärmestrahlungssensoren sind vorzugsweise im Innenraum der Laserbearbeitungskopfes mit einem axialen Abstand von der Laserbearbeitungsdüse angeordnet, da sie so besser an die Steuerung angeschlossen werden können

Die Düse wird gegebenenfalls als Wechseldüse ausgeführt und kann u.U. auch nur als reine Zentrierdüse eingesetzt werden, d.h. es kann für die Zentrierung eine eigene Düse vorgesehen sein, die entsprechend dem Zentrierbedarf speziell ausgerüstet ist, bei der also z.B. die Düsenöffnung kleiner oder grösser ist, oder bei der z.B. die Umwandlungseinheit bzw. Umwandlungskante anders oder deutlicher ausgebildet ist, als man das allenfalls bei einer normalen Arbeitsdüse haben möchte.

Bei einem Ausführungsbeispiel der Erfindung sind (wenigstens) drei oder vier optische Strahlungssensoren vorgesehen, welche im Innenraum entlang des Umfanges der inneren Mantelfläche des Laserbearbeitungskopfes verteilt, z.B. in einer auf die Düsenachse normalen, i.d.R. horizontalen Ebene angeordnet sind. Diese Anordnung ermöglicht eine einfache Konstruktion und dennoch sichere Überwachung.

Es ist auch eine Ausführung möglich, bei welcher in die Strahlführung zwischen den Wärmestrahlungssensoren und der Umwandlungskante mindestens ein Umlenkreflektor schräg zur Achse der Düse zum Umlenken des von der Umwandlungskante abstrahlenden sekundäre(n) (Wärme)strahl(en) auf einen der (oder auf die) Wärmestrahlungssensoren angeordnet ist. Bei dieser Anordnung können die Sensoren etwa radial im Bearbeitungskopf angeordnet werden.

Nach einem weiteren Merkmal der Erfindung ist die Umwandlungseinheit, insbesondere die Umwandlungskante an der inneren Mantelfläche der Laserbearbeitungsdüse in der Nähe der Düsenöffnung vorgesehen. Vorzugsweise kann die Umwandlungseinheit als eine integrierte trichterförmige Kante der Laserbearbeitungsdüse ausgebildet sein, welche die mittige Düsenöffnung begrenzt. Gegebenenfalls kann aber die trichterförmige Umwandlungseinheit als ein separates kegelringartiges Element ausgebildet werden, welches mit seiner mittigen Öffnung im Innenraum der Laserbearbeitungsdüse in seiner vorbestimmten axialen Lage fixiert ist. Die Umwandlungseinheit kann aus Segmenten ausgebildet sein.

In der bevorzugten Ausführungsform schließt die Umwandlungseinheit in radialer Richtung (zur Düsenachse) einen Neigungswinkel von etwa 4-8° vorzugsweise 5,0° - 5,5° mit der Horizontalen ein. Der Neigungswinkel ergibt sich dabei jedoch auch aus der gewählten Konstruktion, insofern könnte durch eine andere Konstruktion auch ein anderer Winkel z.B. ca. 45° gewählt werden.

Bei einer anderen Ausführungsform ist die Umwandlungseinheit an der inneren Mantelfläche eines separaten zusätzlichen Zentrierelementes, insbesondere einer eigenen Zentrierdüse ausgebildet, durch welches die Laserbearbeitungsdüse während des Zentrierungsprozesses ersetzt wird, und welches am unteren Ende des Laserbearbeitungskopfes koaxial, z.B. durch ein Gewinde oder eine Passung (mit minimalem Spiel von z.B. 0,02 mm) oder durch einen Schnellverschluss, befestigt ist. Durch diese Maßnahme kann die Laserbearbeitungsdüse von den Einflüssen des Zentrierens vollständig verschont werden. Eine Ausführungsform mit Passung erfordert keine Drehbewegung und ist insofern vorteilhaft gegenüber einer Ausführungsform mit einem Gewinde.

Nach einem Weiterbildungsmerkmal der Erfindung ist die Umwandlungseinheit mit einer (gegebenenfalls metallischen) Beschichtung zur Erhöhung der Verschleißfestigkeit und der Umwandlungsintensität versehen.

Die Wärmestrahlungssensoren zur Überwachung des umgewandelten sekundären Wärmestrahls mit Wellenlängen von ca. 1,0 - 2 µm sind als "InGaAs"-Dioden ausgebildet. Eine konkret eingesetzte InGaAs-Diode kann Strahlung von ca. 1 - 2,6 µm detektieren. In der mit diesen Dioden durchgeführten Messungen an einem konkret realisierten Aufbau wurden tatsächlich (gemäß dem NIR-Spektrum) Strahlung von ca. 1 - 2,2µm detektiert.

Vor jedem Wärmestrahlungssensor ist eine (oder mehrere) Glasscheibe angeordnet, welche einerseits den Wärmestrahlungssensor vor Verunreinigungen und andererseits vor schädlicher C02-Laserstrahlung (über 10 µm) schützt. Die Glasscheibe ist an mindestens einer ihrer Seitenflächen mit einer Umwandlungsschicht versehen, die CO2-Laserstrahlung in Wärmestrahlung umwandelt und zum Wärmestrahlungssensor durchlässt Die Glasscheibe wirkt somit analog der Umwandlungseinheit/Umwandlungskante der Düse als eine Vorrichtung, die C02 Laserstrahlung in eine Wärmestrahlung wesentlich kleinerer Wellenlänge (im NIR- Bereich) umwandelt, um dadurch eine optimale Detektion auf dem Wärmestrahlungssensor zuzulassen und dessen Eigenschaften für den Zentrierzweck optimal zu nutzen.

Es ist zweckmäßig, wenn die Glasscheibe vor dem zugehörigen optischen Strahlungssensor in einem Abstand angeordnet ist. Darüber hinaus, können die Glasscheibe und der zugehörige Wärmestrahlungssensor in einer gemeinsamen Halterung angeordnet werden, welche in einer Aussparung des unteren Kopfteiles fixierbar ist.

Beim dem erfindungsgemäßen Zentrierverfahren wird gemäß Anspruch 9 ein fokussierter Laserarbeitsstrahl relativ zu der Düsenöffnung des Laserbearbeitungskopfes der erfindungsgemäßen Laserbearbeitungsmaschine zentriert, wobei
a) vor oder während einer Laserbearbeitung eine X-Y-Koordinatenebene in einer Normalebene auf eine Düsenachse definiert wird,
b1) im Inneren der Düse die erste Umwandlungseinheit vorgesehen wird, an der ein langwelliger IR-Strahl des fokussierten Laserarbeitsstrahles in Wärme umgewandelt werden kann, um kurzwellige NIR-Strahlung eines sekundären Wärmestrahles zu erzeugen,
b2) vor jedem Sensor die Glasscheibe als die zweite Umwandlungseinheit angeordnet ist, an der langwelliges IR des fokussierten Laserarbeitsstrahls in kurzwelliges NIR umgewandelt wird,
c) der fokussierte Laserarbeitsstrahl relativ zur Düsenöffnung quer zur X-Y-Koordinatenebene und damit quer zur Düsenöffnung so lange verschoben wird, bis er die Umwandlungseinheit trifft und dort wenigstens teilweise als sekundäre Wärmestrahlung im NIR-Bereich entlang einer Ausbreitungsrichtung abgestrahlt wird,
d) und auf die als Wärmestrahlungssensoren ausgebildeten Sensoren auftrifft, und jeder durch den sekundären Wärmestrahl ermittelte Messwert der Wärmestrahlungssensoren zugehörigen X-Y-Koordinaten der Düsenachse und dem fokussierten Laserarbeitsstrahls zugeordnet werden,
e) und dass aus mehreren Messwerten gemäss c) - d) nach mehreren Verschiebungen durch einen Rechner die jeweilige Position des Zentrums der Düsenöffnung relativ zu jener des fokussierten Laserarbeitsstrahls, errechnet wird,
f) und dem gemäss das Zentrum der Düsenöffnung und der fokussierte Laserarbeitsstrahl automatisch relativ zueinander im Sinne des Zentrierens verschoben wird.

Der in Richtung einer als Normalebene auf eine Düsenachse definierten X-Y-Koordinatenebene verschobene fokussierte Laserarbeitsstrahl, trifft auf eine im Bereich der Düsenöffnung angeordnete innere Umwandlungseinheit (Metallfläche auf der der Laserarbeitsstrahl auftrifft und lokal zu Erwärmung führt), von der ein sekundärer (elektromagnetischer) Wärmestrahl abstrahlt und auf NIR-Strahlungssensoren detektiert wird. Jeder durch den sekundären Wärmestrahl von der Umwandlungseinheit entlang des Umwandlungsstrahlenganges ermittelte Messwert der Sensoren wird mit den zugehörigen X-Y-Koordinaten der Düsenachse und des primären Strahles verknüpft. Danach wird aus den Messwerten der Sensoren die jeweilige Position des Zentrums der Düsenöffnung relativ zu jener des fokussierten Laserarbeitsstrahls errechnet. Demgemäss wird zuletzt die Düsenöffnung relativ zum fokussierten Laserarbeitsstrahl relativ zum Zentrum der Düsenöffnung, im Sinne des Zentrierens automatisch verschoben.

Das Anfahren des Laserarbeitsstrahls durch die Laserbearbeitungsdüse mit der inneren Umwandlungseinheit wird bevorzugt in drei oder vier Achsrichtungen (X+; X-; Y+; Y-) der X-Y-Koordinatenebene durchgeführt.

Nach einem weiteren Merkmal des Verfahrens wird das Anfahren des fokussierten Laserbearbeitungsstrahles, durch die Laserbearbeitungsdüse mit der inneren Umwandlungseinheit von Xₘᵢₙ bis Xₘₐₓ durchgeführt, sowie die Wärmestrahlenmaxima und das dazwischen liegende Wärmestrahlenminimum bestimmt; weiters wird das Anfahren des fokussierten Laserbearbeitungsstrahles, durch die Laserbearbeitungsdüse mit der inneren Umwandlungseinheit von Yₘᵢₙ bis Yₘₐₓ durchgeführt, sowie die Wärmestrahlenmaxima und das dazwischen liegende Wärmestrahlenminimum bestimmt, und werden zum Zentrieren die X- bzw. Y-Koordinaten des Zentrums der Düsenöffnung in die X- bzw. Y-Koordinaten des Wärmestrahlendminimums verstellt. Auf diese Weise kann ein exaktes Zentrieren des Laserarbeitsstrahles relativ zur Düsenöffnung oder der Düsenöffnung relativ zum Laserarbeitsstrahl erreicht werden.

Der Startpunkt bei Durchführung des Verfahrens liegt normalerweise immer beim letzten, gespeicherten Zentrum. Von diesem Punkt wird eine Düsenkante angefahren (Reihenfolge egal). Sobald ein (umgewandelter) Wärmestrahl (im NIR) erkannt wird, speichert die Steuerung die Koordinaten. Dies wird in alle vier Achsrichtungen wiederholt. Daraus errechnet die Steuerung ein neues Zentrum. Zur Erhöhung der Genauigkeit wird obiges Vorgehen allenfalls nochmals durchlaufen. Erst dieses neu ermittelte zweite Zentrum wird danach verwendet.

Das Verfahren kann auch so durchgeführt werden, dass anstelle des Laserarbeitsstrahls ein leistungsschwächerer Richtstrahl - verglichen mit dem primären elektromagnetischen Strahl - in die Laserbearbeitungsstrahlenachse gelegt wird, wonach dieser relativ zur Düse oder die Düse relativ zu diesem Richtstrahl verstellt wird. Dieser Richtstrahl muss dabei jedoch aus Wärmestrahlung bestehen oder ebenso wie die Arbeitslaserstrahlung umwandelbar sein.

Bei einer bevorzugten Durchführung des Verfahrens wird der fokussierte Laserarbeitsstrahl, insbesondere CO₂-Laserarbeitsstrahl, mit einer Wellenlänge von etwa 10,6 µm in den reflexbeschichteten Glasscheiben vor den Wärmestrahlungssensoren zu einem für InGaAs-Dioden sichtbaren sekundären Wärmestrahl mit Wellenlängen von etwa 1,0 - 2,2 µm umgewandelt.

Das wiederholbare und recht präzise und kurzzeitige Zentrieren kann also mithilfe der vorliegenden Erfindung mit relativ einfachen Mitteln automatisiert werden. Dies ist eine Grundvoraussetzung für qualitativ hochwertiges Laserschneiden, bei dem keine richtungsabhängigen Schneidergebnisse auftreten dürfen.

Die erfinderische Idee besteht also einerseits darin, dass anstatt der äusseren Temperatursensoren und des Auftreffens des Laserstrahls auf dem Werkstück ein Auftreffen des fokussierten primären Laserarbeitsstrahles auf der inneren erfindungsgemässen Umwandlungseinheit in der Nähe der Düsenöffnung oder vor den Wärmestrahlungssensoren einen sekundären Wärmestrahl im Wellenlängenbereich von ca. 1 - 2,2 µm erzeugt, wenn sich das System Laserarbeitsstrahl / Düsenöffnung in einem unzentrierten Zustand befindet, und der so erzeugte innere sekundäre elektromagnetische Wärmestrahl durch innenliegende Wärmestrahlungssensoren zuverlässig detektiert wird. Es wird somit der fokussierte primäre elektromagnetische Strahl, insbesondere der CO₂-Laserarbeitsstrahl zu einem, für InGaAs-Dioden sichtbaren sekundären NIR Umwandlungsstrahl von 1,0 - 2,2 µm umgewandelt.

Aus den digitalen Sensormesswerten ist es für ein an sich bekanntes CNC-System der Maschine (Hauptachsen) möglich, die Mitte der Düsenbohrung in an sich bekannter Weise zu errechnen. Es ist allerdings nötig, das Auftreten der Strahlung mit der exakten Achsposition (X-Y Koordinaten) zu verknüpfen. Danach ist die Maschine bereits in der Lage, die Düse im Sinne des Zentrierens relativ zum Laserstrahl oder umgekehrt mittels der Ausrichtvorrichtung schnell und exakt zu verschieben. Allenfalls kann auch nur - wie an sich bekannt - nach der erfindungsgemässen Detektion der Wärmestrahlung aus den Umwandlungseinrichtungen die Linse im Laserstrahl verschoben werden, um den Laserstrahl relativ zur Düsenöffnung auszurichten.

Die nötigen Massnahmen zur automatischen Düsenzentrierung sind, wie folgt:
▪ Die an der Umwandlungskante oder in einem beschichteten (Umwandlungs-) Glas entstehende sekundäre Umwandlungsstrahlung (Wärmestrahlung) wird durch innenliegende Wärmestrahlungssensoren erfasst. Dies wird mit einer speziellen und neuartigen Düsenausbildung mit einer Umwandlungseinheit erreicht; Erfindungsgemäß sind sowohl die Umwandlungseinheit bevorzugt ausgebildet als Umwandlungskante als auch das Umwandlungsglas vorhanden. Entscheidend ist, dass nicht die CO2 Laserstrahlung, sondern eine sekundäre Wärmestrahlung detektiert wird. Diese Wärmestrahlung ist aufgrund ihrer Breitbandigkeit auch noch bei einer um eine 10erpotenz kleinere Wellenlänge mit an sich bekannten hochauflösenden und verzögerungsfrei detektierenden InGaAs-Sensoren (Wärmebildsensoren) bestens und günstig zu detektieren.
▪ Die inneren Strahlungssensoren sind z.B. im Innenraum des Bearbeitungskopfes so anzuordnen, dass sie die auftretenden sekundären Umwandlungswärmestrahlung erfassen können;
▪ Die Laserleistung während des Anfahrens an die Zentrierdüse erfolgt allenfalls kurzzeitig mit hoher Leistung (d.h. Betriebsleistung; Kilowatt-Bereich), um möglichst dem normalen Schneidzustand zu entsprechen;
▪ Um durch die hohe Laserleistung die Düse nicht zu beschädigen, muss das System gemäss einer besonderen Ausgestaltung so ausgerüstet sein, dass es in der Lage ist, die sekundäre Umwandlungswärmestrahlung so schnell wie möglich zu erfassen und danach den primären Laserarbeitsstrahl sofort abzustellen;
▪ Die CNC Steuerung der Maschine ist in der Lage, das Auftreten der sekundäre Umwandlungsstrahlung mit der exakten Achsposition (X-Y-Koordinaten) zu verknüpfen; dies erfordert ein hinreichend schnelles Erfassen und Verarbeiten des Signals.
▪ Die gewählte Kombination: Strahlwellenlängenumwandlung und Wärmestrahlungsdetektion mittels Wärmestrahlungssensoren hat sich in Prototypen bestens bewährt. Die genauen physikalischen Details, die zur Umwandlung der Strahlwellenlänge im Glas bzw. in der Beschichtung oder zwischen beiden sind noch nicht restlos geklärt, jedoch wird davon ausgegangen, dass es in der Molekularstruktur zu punktuellen Erwärmungen kommt, die ihre Wärmestrahlung durch das Glas auf den Wärmestrahlungssensor abgeben.

Das Anfahren des Laserarbeitsstrahls an die innere Umwandlungskante erfolgt vorzugsweise nacheinander in vier Achsrichtungen (X+; X-; Y+; Y-), alternativ in drei Achsrichtungen (bei drei Sensoren)

Das erfindungsgemässe Verfahren kann wie folgt durchgeführt werden:
Der Startpunkt liegt immer beim letzten, gespeicherten Zentrum. Von diesem Punkt wird durch Verstellen der Düse oder durch Verstellen der Düsenhalterung relativ zur Düse durch den Arbeitslaserstrahl eine Düsenkante angefahren. Sobald von einem der Sensoren ein Wärmestrahl erkannt wird, speichert die Steuerung die Koordinaten. Dies wird in alle 4 (allenfalls 3) Achsrichtungen wiederholt. Daraus errechnet sich die Steuerung ein neues Zentrum. Zur Erhöhung der Genauigkeit wird obiges Vorgehen vorzugsweise nochmals durchlaufen. Voneinander abweichende Zentren nach mehreren Zentrier-Durchläufen können auch rechnerisch zu einem tatsächlichen Zentrum interpoliert werden. Erst das neue Zentrum wird nun endgültig zur Laserbearbeitung verwendet.

Weitere Vorteile, Merkmale und Einzelheiten der Erfindung ergeben sich aus der nachfolgenden Beschreibung, in der unter Bezugnahme auf die Zeichnungen Ausführungsbeispiele beschrieben sind.

Die Bezugszeichenliste ist Bestandteil der Offenbarung.

Die Figuren werden zusammenhängend und übergreifend beschrieben. Gleiche Bezugszeichen bedeuten gleiche Bauteile, Bezugszeichen mit unterschiedlichen Indices geben funktionsgleiche oder -ähnliche Bauteile an. Es zeigen dabei:
• Fig.1 den Querschnitt eines ersten Ausführungsbeispiels eines Laserbearbeitungskopfes der Laserbearbeitungsmaschine;
• Fig.2 den Querschnitt einer gegenüber Fig.1 leicht abgewandelten Laserbearbeitungsdüse mit Umwandlungskante in unmittelbarer Nähe der Düsenöffnung;
• Fig.3 einen Querschnitt eines zusätzlichen Zentrierelementes als Ersatz der Laserbearbeitungsdüse während des Zentriervorganges mit Umwandlungskante im eingebauten Zustand;
• Fig.4 eine schematische Darstellung eines zweiten Ausführungsbeispieles eines Laserbearbeitungskopfes;
• Fig.5 eine Oberansicht eines dritten Ausführungsbeispieles eines erfindungsgemässen Laserbearbeitungskopfes;
• Fig.6 einen Schnitt entlang der Linie VI-VI in Fig. 5;
• Fig.7 einen Diagramm des Lichtdurchlasses bei der beschichteten Glasscheibe nach Fig.6 zwischen Wellenlängen von 0,5 und 1,2 Mikrons des sekundären Strahles;
• Fig.8 einen Diagramm der Reflexionswirkung der beschichteten Glasscheibe nach Fig. 6 zwischen Wellenlängen von 6,6 und 16,6 Mikrons;
• Fig.9 einen Diagramm des Lichtspektrums des primären Strahles bei der Schutzglasscheibe mit HR ("high reflection") Beschichtung nach Fig.6.

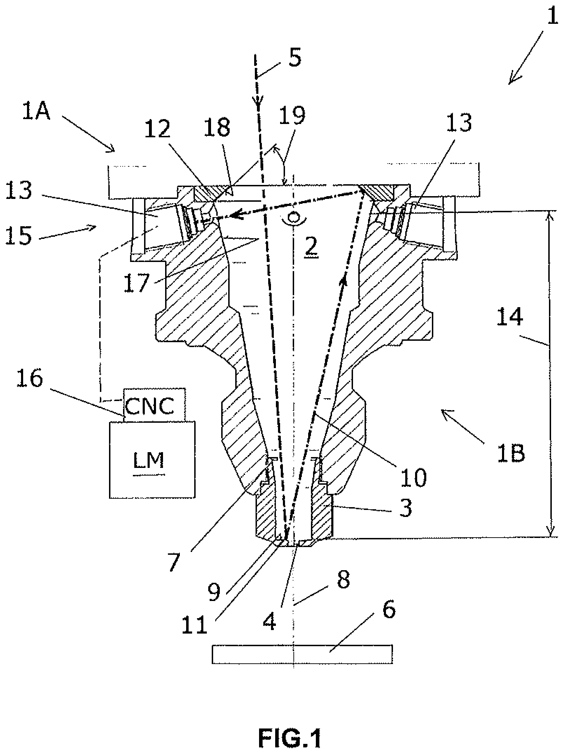

Aus der Fig.1 ist im Rahmen eines ersten Ausführungsbeispiels der Aufbau eines Laserbearbeitungskopfes 1 ersichtlich, welcher zu der, hier nur schematisch als "black box" dargestellten Laserbearbeitungsmaschine LM gehört.

Der Laserbearbeitungskopf 1 der Laserbearbeitungsmaschine LM ist in diesem Falle in zwei Teile geteilt, d.h. er besteht aus einem oberen Kopfteil 1A und einem unteren Kopfteil 1B, welche zueinander in Richtungen einer zur Düsenachse 8 normalen X-Y-Koordinatenebene verschiebbar angeordnet sind (eine solche verschiebbare und verteilte Anordnung des Kopfes ist z.B. in unserer früheren Patentanmeldung EP10170451.8 offenbart).

Der untere Kopfteil 1B hat einen sich nach oben erweiternden Innenraum 2, welcher von unten durch eine Laserbearbeitungsdüse 3 begrenzt ist. Die Laserbearbeitungsdüse 3 ist mit einer axialen Düsenöffnung 4 zum Richten eines (in an sich bekannter Weise erzeugten) des fokussierten Laserarbeitsstrahls 5 auf ein zu bearbeitendes Werkstück 6 ausgebildet. Die Laserbearbeitungsdüse 3 nach Fig.1 ist mit dem Kopfteil 1B durch ein Schnellverschluss 7 oder ein Gewinde oder durch eine Passung mit minimalem Spiel von 0,02 mm lösbar verbunden, wobei ihre Düsenöffnung 4 koaxial zum rotationssymmetrischen Innenraum 2 des unteren Kopfteils 1B angeordnet ist. In Fig.1 ist der fokussierte Laserarbeitsstrahl 5 schematisch durch eine strichlierte Linie dargestellt.

Im Bereich der Düsenöffnung 4 mindestens eine innere Umwandlungseinheit 9, z.B. in Form einer Umwandlungskante vorgesehen, welche bei mangelnder Zentrierung der Düsenöffnung 4 relativ zum fokussierten Laserarbeitsstrahl 5 zur Umwandlung des primären, fokussierten Strahl 5 in einen sekundären Wärmestrahl 10 entlang einer Strahlungsrichtung 10A geeignet ausgebildet und angeordnet ist (siehe Fig. 1).

Bei stark exzentrischem Arbeitsstrahlengang 10A kann der fokussierte Laserarbeitsstrahl nicht durch die Düsenöffnung 4 hindurch auf das Werkstück 6 gerichtet werden, sondern er trifft auf der geneigten Fläche der Umwandlungseinheit 9 auf (siehe Auftreffpunkt 11 in Fig.1). Das in diesem Fall unbedingt erforderliche Zentrieren kann bei der Laserbearbeitungsmaschine LM relativ einfach, schnell und automatisch und mit hoher Auflösung durchgeführt werden.

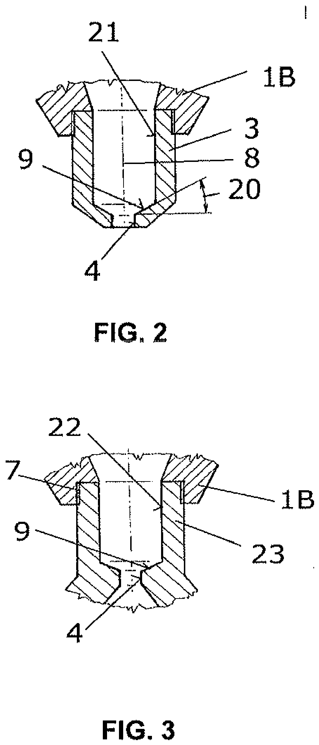

Die Umwandlungseinheit 9, z.B. eine Umwandlungskante, ist im ersten Ausführungsbeispiel genau so geneigt (siehe Figuren 1 und 2), dass der an ihr erzeugte sekundäre Wärmestrahl 10, entlang des in Fig. 1 strichpunktierten Strahlrichtung 10A auf einen Reflektor 12 gelenkt und nach Umwandlung an diesem Reflektor 12 von einem Wärmestrahlungssensor 13 erfasst wird.

Die Wärmestrahlungssensoren 13, welche den sekundären Wärmestrahl 10 am Ende seiner Strahllaufes entlang der strichpunktierten Strahlrichtung 10A überwachen, sind vorzugsweise in einem axialen Abstand 14 von der Umwandlungseinheit 9 und in der Wand des Innenraumes 2 versenkt angeordnet.

Die Wärmestrahlungssensoren 13 gehören zu einer Ausrichtvorrichtung 15, welche geeignet ist, den unteren Kopfteil 1B zusammen mit der Düsenöffnung 4 relativ zum fokussierten Laserarbeitsstrahl 5 zu verschieben, d.h. zu zentrieren. Dazu ist die Ausrichtvorrichtung 15 mit bekannten Antrieben (nicht dargestellte Hauptachsen der Maschine) ausgerüstet, welche Verstellungen mindestens in X-Y-Achsrichtungen ermöglichen. (Solche Ausrichtvorrichtungen sind näher z.B. aus der JP56041092 oder EP10170451.8 bekannt.

Die Wärmestrahlungssensoren 13 der Ausrichtvorrichtung 15 liefern Messsignale an ein an sich bekanntes CNC-System 16 (Hauptachsen) der Laserbearbeitungsmaschine LM (Fig.1).

Beim Zentrieren wird das relative Anfahren des primären fokussierten Laserarbeitsstrahls 5 an die Laserbearbeitungsdüse 3 vorzugsweise in vier Achsrichtungen X+ und X-, sowie Y+ und Y- durchgeführt (bei nur drei Sensoren 13 würde die Verschiebung nur in drei zueinander um 120° versetzten Richtungen erfolgen). Der primäre Strahl 5 wird also relativ zur Laserbearbeitungsdüse 3 in allen vier Richtungen +/-X und +/-Y verschoben, bis der fokussierte Laserarbeitsstrahl, jeweils an der schrägen Kante der Umwandlungseinheit 9 der Laserbearbeitungsdüse 3 als sekundärer Wärmestrahl 10, entlang des oben beschriebenen Wärmestrahlenganges 10A reflektiert wird. An dessen Ende wird der sekundäre Wärmestrahl 10, von den optischen Wärmestrahlungssensoren 13 detektiert, und deren Messwerte werden gespeichert. Diese gespeicherten Messwerte müssen allerdings mit der exakten Achsposition (Koordinaten X-Y) verknüpft werden. Dies bedeutet, dass die Wärmestrahlungssensoren 13 jeweils nur eine Information für die Steuerung erzeugen. Diese speichert aber auch die Koordinaten. Mit dieser Information werden also auch die Koordinaten gespeichert. Dadurch ist es für das CNC-System 16 möglich, zu einem gegebenen unzentrierten Zustand die Mitte der Düsenöffnung 4 als zentrierte Soll-Lage zu errechnen.

Danach kann die eigentliche automatische Düsenzentrierung mittels Verschiebung des Kopfteils 1B gegenüber dem Kopfteil 1A in Richtungen der X-Y Achsen durch Betätigung der Ausrichtvorrichtung 15 durchgeführt werden. Wird der obige vollautomatische Düsenzentrierungsprozess in Verfolgung aller vorzeichenbehafteten Richtungen der X-Y-Ebene mehrfach ausgeführt, so wird das Zentrum der Düsenöffnung 4 durch die Laserbearbeitungsmaschine LM schnell, systematisch und genau in den primären Strahl 5, insbesondere den Laserarbeitsstrahl, verschoben.

Für diese Ausführung ist es vorgesehen, dass der Laserbearbeitungskopf 1 mithilfe der Antriebe der Ausrichtvorrichtung 15 in der X-Y-Ebene verstellbar ist. Die Ausmessung der zentrierten Position der Laserbearbeitungsdüse 4 kann zum Beispiel folgendermassen ausgeführt werden:
- Start bei Xₘᵢₙ und kommt eine Verschiebung bis Xₘₐₓ. Dazwischen gibt es ein Wärmestrahlenmaximum und ein Wärmestrahlenminimum. Das Wärmestrahlenminimum gibt die ideale Zentrierung in X-Richtung an, das merkt sich der Rechner;
- Danach kommen ein Start bei Yₘᵢₙ und eine Verschiebung bis Yₘₐₓ. Dazwischen gibt es auch ein Wärmestrahlenmaximum und ein Wärmestrahlenminimum. Das Wärmestrahlenminimum gibt die ideale Zentrierung in Y-Richtung an, das merkt sich der Rechner. Ein Rechner (des CNC-Systems) bringt nun die X- und Y-Achsen genau in die Wärmestrahlenminimumpositionen von X und Y, womit die Idealzentrierung erreicht ist.

Wichtig dabei ist, dass das Zentriersystem nicht - wie im zitierten Stand der Technik - auf Reflexion und Absorption des Laserarbeitsstrahles und auf Temperaturmessungen am Werkstück unterhalb der Düse basiert. Hier sind vielmehr optische Wärmestrahlungssensoren 13 vorgesehen, welche innen im Laserbearbeitungskopf 1 unterhalb (ggf. auch oberhalb) der Fokussieroptik (nicht gezeigt), jedenfalls aber deutlich oberhalb der Laserbearbeitungsdüse 3, und nicht an der Düse bzw. in der Düse angeordnet sind. Damit können die mithilfe des fokussierten Laserarbeitsstrahls, durch den sekundären Wärmestrahl 10 an die Wärmestrahlungssensoren 13 übermittelten Signale sehr schnell, präzise und reproduzierbar erfasst werden.

In der Ausführung nach Fig.1 sind vier optische Wärmestrahlungssensoren 13 vorgesehen, welche im Innenraum 2 entlang des Umfanges einer inneren Mantelfläche 17 des Laserbearbeitungskopfes 1 gleichmässig verteilt (ggf. in Ringform) in einer zur X-Y-Ebene parallelen Ebene angeordnet sind (davon sind nur zwei in Fig.1 illustriert). Gegebenenfalls könnten mehr als vier (oder weniger, z.B. drei) optische Strahlungssensoren 13 zweckmässig sein.

Wie oben schon erwähnt, ist in Fig.1 der Reflektor 12 zum Umlenken/Umrichten des, an der Umwandlungseinheit 9 entstehenden sekundären Wärmestrahls, in Richtung der Wärmestrahlungssensoren 13 entlang der V-förmigen Strahlausbreitungsrichtung 10A zwischen der Umwandlungseinheit 9 und den Wärmestrahlungssensoren 13 angeordnet. Der Reflektor 12 weist im ersten Ausführungsbeispiel eine konische Reflexionsfläche 18 auf. Diese schliesst in radialer Richtung einen Winkel 19 mit der Horizontalen ein, dessen Wert vorzugsweise etwa 45° beträgt.

Der ringförmige Reflektor 12 ist nach Fig.1 im oberen Bereich des unteren Kopfteiles 1B als Ringelement koaxial und lösbar fixiert. Gegebenenfalls könnte der Reflektor 12 aus mehreren Teilen, z.B. Segmenten ausgebildet sein (nicht dargestellt). In einem typischen Ausführungsbeispiel ist er einfach an der Innenwand der Düse ausgebildet. In Fig. 2 ist ersichtlich, dass die Umwandlungseinheit 9 - in radialer Richtung (zur Düsenachse) betrachtet - einen Neigungswinkel 20 mit der Horizontalen einschliesst, dessen Wert bei unseren Versuchen auf 4 bis 7°, vorzugsweise etwa 5,0° bis 5,5° gewählt wurde (wie schon angemerkt können aufgrund der Konstruktion aber auch andere Winkel gewählt werden). In Figuren 2 und 3 ist die Umwandlungseinheit 9 als eine integrierte radiale kegelringförmige Kante der Laserbearbeitungsdüse 3 ausgebildet, welche die Düsenöffnung 4 begrenzt und z.B. aus Kupfer hergestellt ist. Dies ermöglicht eine einfache Ausführung. Es ist aber zu betonen, dass die Umwandlungseinheit 9 mit (oder ohne) Düsenöffnung 4 als separates Element ausgebildet sein könnte, welches an einer inneren Mantelfläche 21 der Laserbearbeitungsdüse 3 in seiner vorbestimmten axialen Lage fixierbar ist (nicht gezeigt). Es ist auch eine Ausführung möglich, bei welcher die Umwandlungseinheit 9 aus mehreren Umwandlungsteilen, z.B. aus radialen Umwandlungssegmenten ausgebildet ist (nicht dargestellt).

Die Umwandlungseinheit 9 ist nicht unbedingt in der Laserbearbeitungsdüse 3 selbst (siehe Figuren 1-2) vorgesehen. In Fig.3 ist eine weitere mögliche Ausführung illustriert, wobei die Umwandlungseinheit 9 an einer inneren Mantelfläche 22 eines separaten zusätzlichen Zentrierelementes, insbesondere einer Zentrierdüse 23, ausgebildet ist, durch welches die Laserbearbeitungsdüse 3 während des Zentrierungsprozesses, z.B. vor dem normalen Maschinenbetrieb, ersetzt wird. Das Zentrierelement 23 ist also nach Abmontieren der Laserbearbeitungsdüse 3 am unteren Ende des Laserbearbeitungskopfes 1 koaxial angeordnet und z.B. durch eine Passung (mit minimalem Spiel von z.B. 0,02 mm) oder durch einen Schnellverschluss 7 lösbar fixiert. Durch die Anwendung des zusätzlichen Zentrierelementes 23 kann die Laserbearbeitungsdüse 3 sogar von den geringen Belastungen des Zentrierprozesses vollständig verschont werden.

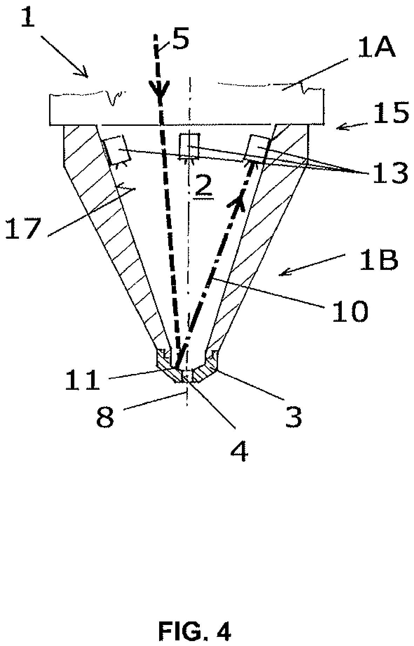

In Fig. 4 ist das zweite, konstruktiv einfachere Ausführungsbeispiel eines Laserbearbeitungskopfs 1 schematisch dargestellt. Ein wesentlicher Unterschied zur ersten Ausführung nach Fig.1 liegt darin, dass die Ausbreitungsrichtung 10A des sekundären Wärmestrahles 10 hier nicht über einen Reflektor, sondern direkt zu einem der optischen Wärmestrahlungssensoren 13 führt. Auf den Reflektor wird also hier verzichtet. Die optischen Wärmestrahlungssensoren 13 sind im Innenraum 2 entlang des Umfanges der inneren Mantelfläche 17 des Laserbearbeitungskopfes 1 z.B. in einer zur X-Y-Ebene parallelen Ebene gleichmässig verteilt, und so nach unten orientiert (siehe Fig.4), dass sie den an der Umwandlungseinheit 9 entstehenden sekundären Strahl 10 via seiner Ausbreitungsrichtung 10A direkt detektieren können. Damit erfolgt die Messwerterfassung über Wärmestrahlung noch schneller, präziser und reproduzierbarer.

Nach dem erfindungsgemässen Verfahren wird zum Zentrieren des fokussierten Laserarbeitsstrahles 5 relativ zur Düsenöffnung 4 des Laserbearbeitungskopfes 1 (oder umgekehrt) vor oder während einer Laserbearbeitung der, in Richtungen einer als Normalebene auf eine Düsenachse definierten X-Y-Koordinatenebene bewegte fokussierte Laserarbeitsstrahl 5, von einer, im Bereich der Düsenöffnung 4 angeordneten inneren Umwandlungseinheit 9 als ein sekundärer Wärmestrahl 10, seiner Ausbreitungsrichtung 10A folgend auf die Wärmestrahlungssensoren 13 gerichtet. Jeder durch den sekundären Wärmestrahl 10 von der Umwandlungseinheit 9 entlang der Ausbreitungsrichtung 10A ermittelte Messwert der Wärmestrahlungssensoren 13 wird mit den zugehörigen X-Y-Koordinaten der Düsenachse 8 und des fokussierten Laserarbeitsstrahls 5 verknüpft. Danach wird aus den Messwerten der Wärmestrahlungssensoren 13 die jeweilige Position des Zentrums der Düsenöffnung 4 relativ zu jener des fokussierten Laserarbeitsstrahls 5 errechnet und dem gemäss die Düsenöffnung 4 relativ zum fokussierten Laserarbeitsstrahl 5 oder der fokussierte Laserarbeitsstrahl relativ zum Zentrum der Düsenöffnung 4 im Sinne des Zentrierens automatisch verschoben.

Nachstehend werden Beispiele aus diversen Messungen gegeben. Die Startbedingungen für den Zentrierprozess waren wie folgt:
- Bei in X-minus Richtung um 0,35 mm aussermittig positionierter Düse 3 waren Wärmestrahlen umgewandelt aus dem gepulsten Laserarbeitsstrahl am optischen Wärmestrahlungssensor 13 sichtbar;
- Bei in X-minus Richtung um 0,4 mm aussermittig positionierter Düse 3 traten starke Signale am Wärmestrahlungssensor 13 auf.

Um die Zentriergenauigkeit möglichst zu erhöhen, sollte der Signalanstieg immer möglichst gleich bleibend sein (speziell in Richtung + und - pro Achse) und musste das Signal klar erkennbar sein. Dies wurde beispielsweise mit folgenden Testparametern für die Steuerung erreicht:
- Detektionsvorschub: 200 mm/min
- Pegel: 10 Mio
- Laserleistung: 3 kW
- Die Anstiegszeit vom Grundrauschen bis zum Auslösen des Ausschalt-Signals (10 Mio) dauerte zwischen 1-3 ms. Das Signal stieg noch weiter an, da die Laserleistung erst ab Erkennen des Pegels mit einer vorbestimmten Verzögerung ausgeschaltet werden konnte und da die punktuelle Erwärmung jeweils erst abklingen muss, was grundsätzlich schnell erfolgt, da die Düse meistens aus Kupfer besteht und daher sehr gut die Wärme leitet.

Unter dem Begriff "Pegel" ist in der Praxis ein Schwellwert in der Steuerung des CNC-Systems 16 der Maschine LM gemeint, der entscheidet, ob das Signal von einem der Wärmestrahlungssensoren 13 erkannt wurde oder nicht. Der an der Umwandlungseinheit 9 entstehende sekundär elektromagnetische Strahl, insbesondere Wärmestrahl 10, trifft entlang seiner Ausbreitungsrichtung 10A auf den Strahlungssensor 13 (InGaAs-Diode) auf. Letzterer erzeugt je nach Stärke der Strahlung ein Spannungssignal, das anschliessend mit geeigneter Elektronik des CNC-Systems 16 in an sich bekannter Weise weiter verarbeitet wird.

Unter der Anwendung der obigen Elektronik werden Werte von 0 (keine reflektierte Strahlung) bis 2 Mia Einheiten (gesättigte Diode) gemessen. Wird ein Pegel z.B. von 10 Mio Einheiten überschritten, ist das eine Entscheidungsgrundlage für das sofortige Abschalten der Laserleistung. Exakt zu diesem Zeitpunkt werden auch die X- und Y-Achspositionen gespeichert. Damit ist bekannt, wo sich jetzt die Düsenöffnungsmitte (Düsenachse 8) befindet.

Zum automatischen Zentriervorgang gemäss der Erfindung sollten z.B. folgende Einstellungen in der CNC-Steuerung der Maschine hinterlegt werden:
▪ Detektionsvorschub: typisch 50-200 mm/min;
▪ Detektionsleistung: typisch 1-2 Kilowatt;
▪ Gasart: z.B. N₂(Nitrogen);
▪ Gasdruck: typisch 1 bar;
▪ Detektionspegel "Signal erkannt" beim Sensor: typisch 2 Mia (Einheiten).

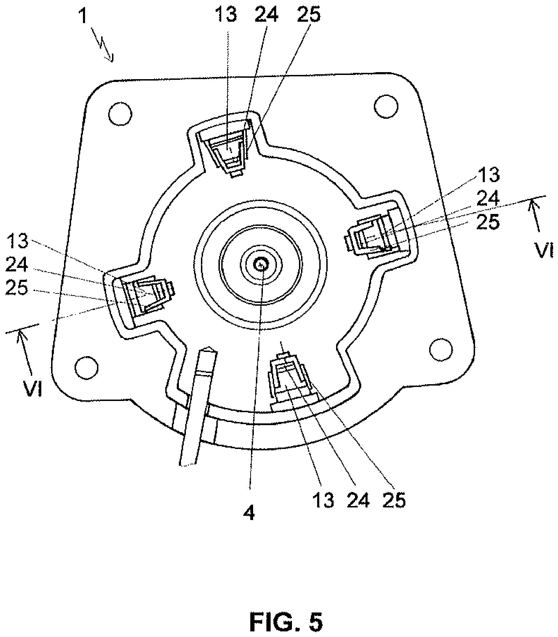

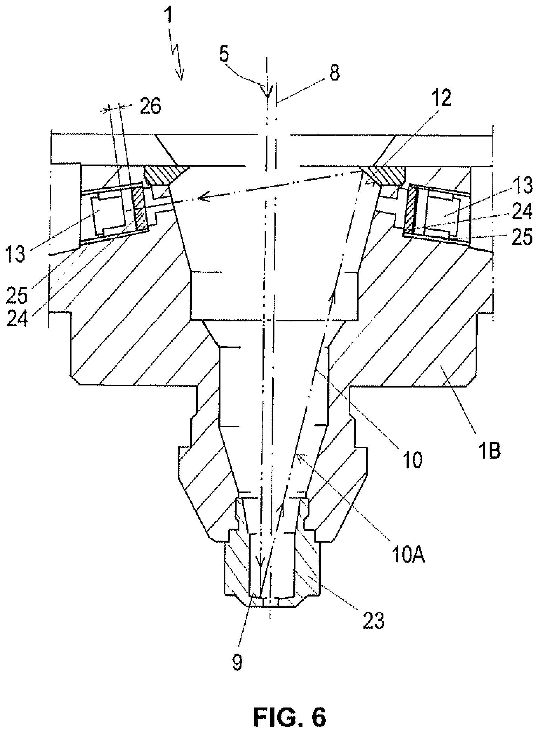

In Figuren 5 und 6 ist ein drittes Ausführungsbeispiel eines erfindungsgemässen Laserbearbeitungskopfes 1 der Laserschneidmaschine dargestellt. Diese Lösung entspricht im Wesentlichen der Ausführung nach Fig. 1 (die gleichen oder äquivalenten Einzelheiten sind mit den gleichen Bezugszeichen bezeichnet), bis auf die Art und Anordnung der Strahlungssensoren 13. Hier sind InGaAs Dioden als optische Wärmestrahlungssensoren 13 angewendet.

Es ist aber aus der Praxis bekannt, dass die bekannten InGaAs-Dioden eine CO2-Laserstrahlung mit einer Wellenlänge von 10,6 µm praktisch nicht detektieren können. Eine erfinderische Erkenntnis wird aber eben darin gesehen, dass der fokussierte primäre CO₂ Laserarbeitsstrahl 5 mit einer Wellenlänge von 10,6 µm zu einem, für die InGaAs-Dioden schon sichtbare breitbandige NIR Strahlung ("NIR" bedeutet hier: "near infra-red") d.h. Infrarot-Strahlung ("Wärmestrahlung") mit Wellenlängen von ca. 1,0 - 2,2 µm umgewandelt wird, welche als ein sekundärer elektromagnetischer Wärmestrahl 10 störungsfrei detektiert werden kann.

Wie in Figuren 5 und 6 illustriert ist, sind die vier InGaAs Wärmestrahlungssensoren 13 in radialer Richtung im Innenraum 2 um etwa 85° zur Düsenachse 8 orientiert. Eine Umwandlungseinheit, z.B. Umwandlungskante 9 einer Zentrierdüse 23 ist so geneigt, dass der, an ihr umgewandelt oder reflektierte sekundärer Umwandlungsstrahl 10 entlang einer V-förmigen Ausbreitungsrichtung 10A auf einen Reflektor 12 gelenkt und nach Reflexion an diesem Reflektor 12 von einem Wärmestrahlungssensor 13 erfasst wird.

Jedem der InGaAs Strahlungssensoren 13 ist bevorzugt mindestens je eine Glasscheibe 24 zugeordnet, welche an einer Stirnseite mit einer HR-Beschichtung ("high reflectivity" = hohe Reflexionsfähigkeit für langwellige Strahlung - insbesondere CO2-Laserstrahlung) versehen ist (die Beschichtung selbst ist in Fig. 6 nicht dargestellt). Die beschichteten Glasscheiben 24 sind in diesem Falle aus handelsüblichem SiO₂-Glas gefertigt.

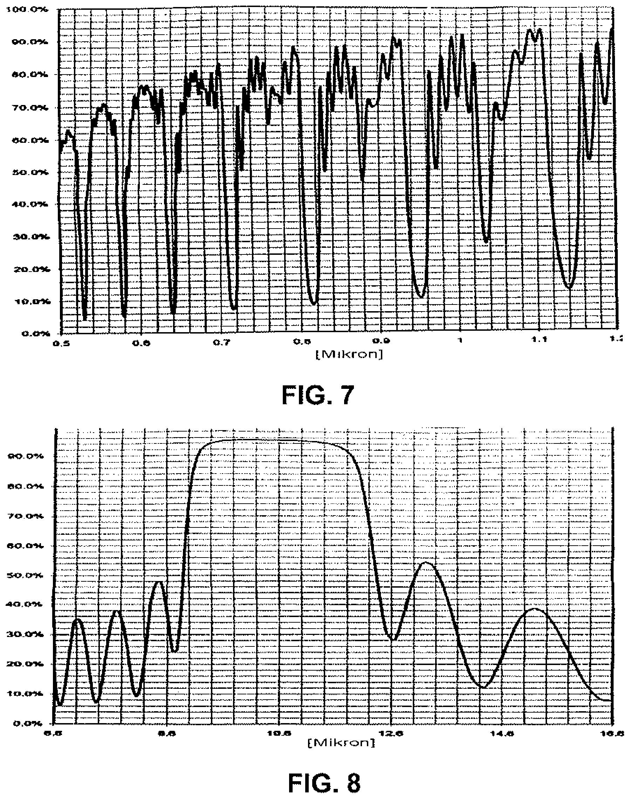

In Fig.7 ist das Lichtdurchlassdiagramm (in %) der beschichteten Glasscheibe 24 nach Fig.6 zu sehen, wobei eine Stirnseite der Glasscheibe 24 mit einer HR-Beschichtung versehen ist. Fig.8 zeigt aber einen Reflexionsdiagramm (in %) der beschichteten Glasscheibe 24, wobei nur die erste Stirnseite der Glasscheibe 24 mit einer HR-Beschichtung versehen ist (Diese Diagramme stammen vom Hersteller). Man könnte sich eventuell vorstellen, beide Stirnseiten der Glasscheibe 24 mit einer solchen Beschichtung zu versehen.

Wie in Fig.7 und 8 ersichtlich, ergibt sich um 70% Transmission (möglichst viel sichtbares Licht, möglichst wenig Laserlicht) und 95% Reflektivität der 10,6 µm primären Laserstrahlung durch die beschichtete Glasscheibe.

Jede Glasscheibe 24 ist beim Ausführungsbeispiel nach Fig.6 vor dem zugehörigen InGaAs Strahlungssensor 13 zweckmässig mit einem Abstand 26 und vorzugsweise in einer gemeinsamen Halterung 25 angeordnet. Jede ausmontierbare Halterung 25 - zusammen mit dem eingebauten InGaAs Strahlungssensor 13 und Glasscheibe 24 - ist in einer Aussparung 27 des unteren Kopfteiles 1B fixiert (Fig.6).

Bei der automatischen Düsenzentrierung mit dem Ausführungsbeispiel nach Figuren 5 und 6 wird also die Zentrierdüse 23 relativ zum fokussierten Laserarbeitsstrahles 5 entlang einer X oder Y Achsenrichtung verschoben, bis eine der InGaAs Strahlungssensoren 13 einen bestimmten Pegel erreicht hat. Die vier InGaAs Strahlungssensoren 13 werden also ausschliesslich durch die +/-X und +/-Y Verschiebungen des Schneidkopfs von der elektromagnetischen Strahlung "beleuchtet", d.h. der Laserstrahl wird in +X Achsrichtung verschoben, die Laserstrahlung wird vom Düsenrand reflektiert und trifft die über einen Spiegel im Schneidkopf, durch einen Filter und die Glasscheibe 24 in umgewandelter Form (NIR) auf die InGaAs Diode(n).

Sobald die Summe der Intensitäten aller vier InGaAs Dioden einen gewissen Wert übersteigt, schaltet der primäre Laserstrahl 5 sofort aus. Wenn dies in alle vier X und Y Achsenrichtungen gemacht wird, kann daraus die gegenseitige Position des primären Laserarbeitsstrahles 5 und der Laserbearbeitungsdüse 3 oder der Zentrierdüse 23 ermittelt, und damit die Laserbearbeitungsdüse 3 oder die Zentrierdüse 23 schnell, zuverlässig und wiederholbar zentriert werden.

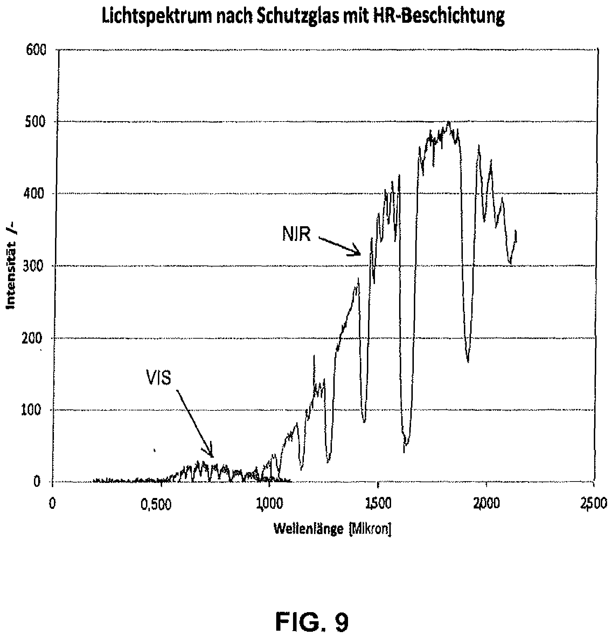

Nach unseren bisherigen Experimenten konnten wir feststellen, dass das Merkmal, wonach der fokussierte primäre CO₂ Laserarbeitsstrahl 5 (10,6 µm) zu einem, für die optischen InGaAs Strahlungssensoren 13 sichtbaren breitbandigen NIR Strahlung (Infrarot-Strahlung per Definition gemäss ISO 20473 0,78 - 3,0 µm) umgewandelt wird, welche als ein sekundärer Wärmestrahl 10 störungsfrei detektiert werden kann, als Tatsache nach unseren Tests mithilfe des Diagramms nach Fig. 9 bewiesen ist (wobei die rechte Kurve die NIR-Strahlung (von 1,0 - 2,2 µm) illustriert). Das tatsächlich von uns aufgenommene Spektrum zeigt auf der rechten NIR Linie auf, dass Laserlicht von 10,6 µm nach dem beschichteten Glas in eine Strahlung von ca. 1,0 - 2,2 µm transformiert wird. (Die linksseitige VIS Linie kommt vom sichtbaren Licht, welches sich aufgrund des Messaufbaus vor dem beschichteten Glas befindet und nicht zur Wärmestrahlung bzw. zum umgewandelten sekundären Strahl gehört. Diese VIS-Linie hat somit zu der Erfindung keinen Bezug, bestätigt lediglich, dass das verwendete Glas sichtbares Licht durchlässt.)

Dies ist aus den folgenden Überlegungen erklärbar, d.h. der umgewandelte sekundäre Umwandlungsstrahl 10 (von ca. 1,0 - 2,2 µm) könnte unserer Ansicht nach stammen aus:
a) einer "Wärmestrahlung", die von einem, sich in der Umwandlungseinheit befindlichen, primären CO₂-Laserstrahlung absorbierendem Material stammt. In Frage kommt noch die Kupferdüse 3 und 23, der Messingdüsenkörper, oder die InGaAs-Dioden-Halterung 25 aus Aluminium, und/oder
b) einer "Wärmestrahlung", die nach der Absorption vom fokussierten primären CO₂-Laserstrahl 5 in der beschichten Glasscheibe 24 vor dem InGaAs Strahlungssensor 13 entsteht, und/oder
c) einem Teil des CO₂-Laserstrahles 5, welcher umgewandelt als sekundärer elektromagnetischer Wärmestrahl 10 auf den InGaAs Strahlungssensor 13 gelangt.

Wesentliche Unterschiede bezüglich der zitierten DE102007048471A:
Nach der vorliegenden Erfindung vergleicht das System die Intensitäten der Sensoren zur Ermittlung der Strahlmitte nicht (wie bei der zitierten deutschen Publikation), sondern hat ein empirisch ermitteltes "Abbruchkriterium" (eben sobald die Summe der Intensitäten aller vier Strahlungssensoren 13 einen gewissen Wert übersteigt), welches dem System sagt, dass es jetzt an der Umwandlungseinheit 9 (am Düsenrand) ist. Bei der Erfindung wird ferner keine Verschiebung in Richtung der Z-Achse gebraucht sondern ausschliesslich X-Y-Verschiebungen, und sie braucht keine speziellen Streuflächen (wie bei der zitierten deutschen Patentanmeldung), weshalb die vorliegende Erfindung von der Spiegelqualität unabhängig ist.

Bei unseren Versuchen mit den Prototypen der erfindungsgemässen Laserbearbeitungsmaschine LM haben wir die folgenden positiven Effekte festgestellt:
- Die reflektierten bzw. umgewandelten Laserarbeitsstrahlen waren gut und präzise mit einer Brennweite von etwa 3,75 - 7,5 Zoll (95 - 190 mm) messbar;
- Um über die Verschleissfestigkeit der Laserbearbeitungsdüse 3 Aufschluss zu bekommen, wurden ca. 2000 Zentrierungen an der gleichen Umwandlungseinheit 9 gemacht und die Signale aufgezeichnet, sowie die Geometrie der Umwandlungseinheit 9 und der Düse 3 beobachtet. Erkenntnis: Anhand der Messergebnisse konnte weder an der Umwandlungseinheit 9 noch an der Düse 3 Verschleiss erkannt werden.

Die durch die automatische Düsenzentrierung erreichbaren wesentlichen Vorteile sind, wie folgt:
▪ Die Zentrierung der Düse erfolgt viel einfacher, schneller und exakter als beim Stand der Technik;
▪ Der Düsenzentrierungsprozess ist praktisch verschleissfrei und reproduzierbar;
▪ Das schnelle Ansprechen erlaubt einen Zentrierprozess mit der hohen Laserbetriebsleistung (kW-Bereich), da der primäre Laserarbeitsstrahl 5 rasch abgeschaltet wird, sobald das durch Strahlumwandlung erfasste Messsignal einen gewissen vorbestimmten Wert überschreitet. Die Düse 3 und die Umwandlungseinheit 9 bleiben deswegen auch bei dieser hohen Laserleistung verschleissfrei;
▪ Unter "schnelle Abschaltung des Laserstrahls" ist gemeint, dass die Reaktionszeit beginnend mit dem Detektieren des Strahls an der Umwandlungseinheit 9 bis zum Befehl "Laser Off" (Laser aus) nicht an die sonst übliche Zykluszeit des CNC-Systems von 16 - 20 ms gebunden ist, sondern per schnellem "Interrupt-Signal" (Abschaltsignal) unverzüglich, d.h. im Mikrosekundenbereich (z.B. 100 µs), erfolgt. Dank dieses schnellen Abschaltens des Laserarbeitsstrahls 5 erwärmen sich die Düse 3 und die Umwandlungseinheit 9 nur punktuell und kurzfristig. Die unerwünschten Wärmebelastungen der Düse, wie sie beim Stand der Technik auftreten können, sind dadurch eliminiert;
▪ Wird die Umwandlungseinheit 9 an der Düsenöffnung 4 gegenüber dem Laserarbeitsstrahl 5 verschoben (bzw. umgekehrt), so erzeugt der Laserarbeitsstrahl 5 ab dem Zeitpunkt seiner Reflexion bzw. Umwandlung an der Umwandlungseinheit 9 ein Messsignal am Strahlungssensor 13, wobei die Steuerung der Maschine LM den Laser rechtzeitig abschaltet, um eventuelle Beschädigungen der Düse 3 und der Umwandlungseinheit 9 zu vermeiden;
▪ Die mindestens drei optischen Strahlungssensoren 13 sind nicht am Verschleissteil (Düse), sondern relativ weit davon entfernt im Laserbearbeitungskopf 1, angeordnet. Dadurch wird diese Erfindung im Gegensatz zu den bekannten Lösungen erst industrietauglich;
▪ Um die Ablenkung des an der Umwandlungseinheit 9 reflektierten bzw. umgewandelten Laserarbeitsstrahls 5 in Richtung der optischen Strahlungssensoren 13 im Laserbearbeitungskopf 1 standardisiert zu gewährleisten, ist eine Umwandlungseinheit 9 mit dem definierten Neigungswinkel 20 notwendig;
▪ Durch die Erfindung kann die Produktionssicherheit und die Arbeitsqualität der Laserbearbeitungsmaschine LM bedeutend erhöht werden.

Es ist noch zu bemerken, dass in den Ausführungen nach Fig.1 oder Fig.4 keine Umwandlungsbeschichtung an der Umwandlungseinheit 9 verwendet wurde. Es kann aber ggf. zur weiteren Erhöhung der Verschleissfestigkeit und der Umwandlungsintensität durchaus sinnvoll sein, die Umwandlungseinheit 9 mit einer Beschichtung, zu versehen.

Weitere Ausführungsformen der erfindungsgemässen Laserbearbeitungsmaschine LM und deren Kombinationen, zu welchen jedoch ein einschlägiger Fachmann in Kenntnis der vorliegenden Offenbarung keine weitere technische Lehre brauchen würde, sind im Rahmen der beiliegenden Patentansprüche vorstellbar.

### Bezugszeichenliste

LM Laserbearbeitungsmaschine / Laserschneidmaschine
1 Laserbearbeitungskopf Im Sinne dieser Anmeldung ist diese Bezeichnung bloss für den Düsenkörper, inkl. Sensorik und Düse bezogen. Ein vollständiger Laserbearbeitungskopf besteht dann zusätzlich noch aus der Fokussieroptik / Linse und weiterer Technik, die jedoch für die Erfindung selbst sekundär ist und in keiner Figur dargestellt.
1A Oberer Kopfteil
1B Unterer Kopfteil
2 Innenraum
3 Laserbearbeitungsdüse
4 Düsenöffnung
5 Primärer fokussierter elektromagnetischer Strahl / Laserarbeitsstrahl
6 Werkstück (zu bearbeiten)
7 Schnellverschluss oder Gewinde oder Passung
8 Düsenachse
9 Umwandlungseinheit / Umwandlungskante
10 Sekundärer elektromagnetischer Strahl / Wärmestrahl
10A Ausbreitungsrichtung des sekundären Wärmestrahls
11 Auftreffpunkt
12 Wärmestrahlenreflektor
13 Wärmestrahlungssensor
14 Abstand
15 Ausrichtvorrichtung
16 CNC-System
17 Innere Mantelfläche (des Kopfes)
18 Reflexionsfläche
19 Winkel
20 Neigungswinkel
21 Innere Mantelfläche (der Düse)
22 Innere Mantelfläche (des Zentrierelements)
23 Zusätzliches Zentrierelement / Zentrierdüse
24 Beschichtete Glasscheibe als zweite Umwandlungseinheit
25 Halterung für Glasscheibe und Wärmestrahlungssensor
26 Abstand
27 Aussparung

## Patentansprüche

1. Laserbearbeitungsmaschine (LM) mit einem Laserbearbeitungskopf (1), welcher einen Innenraum (2) und eine Düse (3) mit einer Düsenöffnung (4) zum Durchlassen eines primären Strahles (5), der ein fokussierter Laserarbeitsstrahl ist, auf ein zu bearbeitendes Werkstück (6) und eine Ausrichtvorrichtung (15) mit mehreren Sensoren (13) zum Zentrieren des fokussierten Laserarbeitsstrahls (5) und der Düsenöffnung (4) relativ zueinander aufweist,
wobei im Bereich der Düsenöffnung (4) eine erste Umwandlungseinheit (9), insbesondere eine Umwandlungskante zur Umwandlung des anstreifenden bzw. auftreffenden fokussierten Laserarbeitsstrahls (5) in einen sekundären Wärmestrahl (10) entlang einer Ausbreitungsrichtung (10A) in Richtung der Sensoren (13) vorgesehen ist,
wobei vor jedem Sensor (13) eine Glasscheibe (24) angeordnet ist, welche an einer Fläche quer zur Ausbreitungsrichtung (10A) mit einer Reflexionsschicht für den fokussierten Laserarbeitsstrahls (5) versehen ist,
**dadurch gekennzeichnet, dass**
die Glasscheibe (24) als zweite Umwandlungseinheit von langwelligem IR des fokussierten Laserarbeitsstrahls (5) in kurzwelliges NIR ausgebildet ist,
wobei die Sensoren (13) als Wärmestrahlungssensoren ausgebildet und im Innenraum (2) des Laserbearbeitungskopfes (1) oder der Düse (3; 23) angeordnet sind und die Wärmestrahlungssensoren (13) zur Überwachung der so umgewandelten sekundären Wärmestrahlung (10) mit Wellenlängen von ca. 1,0-2,2 µm als InGaAs-Dioden ausgebildet sind.

2. Laserbearbeitungsmaschine nach Anspruch 1, **dadurch gekennzeichnet, dass** drei um zueinander je ca. 120° oder vier um je ca. 90° versetzte Wärmestrahlungssensoren (13) vorgesehen sind, welche im Innenraum (2) entlang des Umfanges einer inneren Mantelfläche (17) des Laserbearbeitungskopfes (1 ; 1B) und insbesondere in einer - zur Düsenachse (8) normalen - Ebene verteilt angeordnet sind.

3. Laserbearbeitungsmaschine nach Anspruch 1 oder 2, **dadurch gekennzeichnet, dass** zwischen den Wärmestrahlungssensoren (13) und der ersten Umwandlungseinheit (9) ein Wärmestrahlenreflektor (12) zum Umlenken der von der Umwandeleinheit (9) entlang ihrer Ausbreitungsrichtung (10A) abstrahlenden sekundären Wärmestrahlung (10) auf einen der Wärmestrahlungssensoren (13) angeordnet ist.

4. Laserbearbeitungsmaschine nach einem der Ansprüche 1 bis 3, **dadurch gekennzeichnet, dass** die Düse eine Laserschneiddüse (3) oder eine diese für den Zentriervorgang ersetzende Zentrierdüse (23) ist, und dass die erste Umwandlungseinheit (9) an einer inneren Mantelfläche (21) der Düse (3) oder der Zentrierdüse (23) in der Nähe der Düsenöffnung (4) als eine vorspringende, gegebenenfalls trichterförmige Umwandlungskante vorgesehen ist, die mit einer Normalebene auf eine Düsenachse (8) im Querschnitt einen Neigungswinkel (20) von vorzugsweise ca. 4-7°, insbesondere ca. 5,5° einschließt.

5. Laserbearbeitungsmaschine nach einem der Ansprüche 1 bis 4, **dadurch gekennzeichnet, dass** die Umwandlungseinheit (9) selbst als ein separates ringförmiges, insbesondere trichter- bzw. kegelförmiges Element ausgebildet ist, welches an der inneren Mantelfläche (21) der Laserbearbeitungsdüse (3) oder an der inneren Mantelfläche (22) des zusätzlichen Zentrierelementes (23) koaxial zur Düsenöffnung (4) fixiert ist.

6. Laserbearbeitungsmaschine nach einem der Ansprüche 1 bis 5, **dadurch gekennzeichnet, dass** die Umwandlungseinheit (9) aus mehreren nicht zusammenhängenden Umwandlungssegmenten besteht.

7. Laserbearbeitungsmaschine nach einem der Ansprüche 1 bis 6, **dadurch gekennzeichnet, dass** die Umwandlungseinheit (9) mit einer verschleißfesten und/oder Umwandlungsbeschleunigenden Beschichtung versehen ist.

8. Laserbearbeitungsmaschine nach Anspruch 1, **dadurch gekennzeichnet, dass** die Glasscheibe (24) mit dem zugehörigen Wärmestrahlungssensor (13) in einer gemeinsamen Halterung (25) angeordnet sind, welche in einer Aussparung (27) des Kopfteiles (1B) fixiert ist.

9. Verfahren zum Zentrieren eines primären Strahles (5), der ein fokussierter Laserarbeitsstrahl ist, zu der Düsenöffnung (4) des Laserbearbeitungskopfes (1) einer Laserbearbeitungsmaschine (LM) nach einem der Ansprüche 1 bis 8 relativ zueinander, wobei
a) vor oder während einer Laserbearbeitung eine X- Y-Koordinatenebene in einer Normalebene auf eine Düsenachse (8) definiert wird,
b1) die erste Umwandlungseinheit (9) im Inneren der Düse (3; 23) vorgesehen ist, an der ein langwelliger IR-Strahl des fokussierten Laserarbeitsstrahls (5) in Wärme umgewandelt wird, um kurzwellige NIR- Strahlung eines sekundären Wärmestrahles (10) zu erzeugen,
b2) vor jedem Sensor (13) die Glasscheibe (24) als die zweite Umwandlungseinheit angeordnet ist, an der langwelliges IR des fokussierten Laserarbeitsstrahls(5) in kurzwelliges NIR umgewandelt wird,
c) der fokussierte Laserarbeitsstrahl (5) relativ zur Düsenöffnung (4) quer zur X-Y-Koordinatenebene und damit quer zur Düsenöffnung (4) so lange verschoben wird, bis er die erste Umwandlungseinheit (9) trifft und dort wenigstens teilweise als sekundäre Wärmestrahlung (10) im NIR-Bereich entlang einer Ausbreitungsrichtung (10A) abgestrahlt wird, und
d) auf die als Wärmestrahlungssensoren ausgebildeten Sensoren (13) auftrifft, und dass jeder durch den sekundären Wärmestrahl (10) ermittelte Messwert der Wärmestrahlungssensoren (13) zugehörigen X- Y-Koordinaten der Düsenachse (8) und dem fokussierten Laserarbeitsstrahl zugeordnet werden,
e) und dass aus mehreren Messwerten gemäß c) - d) nach mehreren Verschiebungen durch einen Rechner die jeweilige Position des Zentrums der Düsenöffnung (4) relativ zu jener des Laserarbeitsstrahls errechnet wird, und
f) das Zentrum der Düsenöffnung (4) und der fokussierte Laserarbeitsstrahl automatisch relativ zueinander im Sinne des Zentrierens verschoben wird.

10. Verfahren nach Anspruch 9, **dadurch gekennzeichnet, dass** ein Anfahren des Laserarbeitsstrahls durch die Laserbearbeitungsdüse (3) mit der ersten Umwandlungseinheit (9) im Inneren der Düse (3; 23) in drei oder vier Achsrichtungen (X+; X-; Y+; Y-) der X-Y- Koordinatenebene durchgeführt wird.

11. Verfahren nach Anspruch 9 oder 10, **dadurch gekennzeichnet, dass** ein/das Anfahren des fokussierten Laserarbeitsstrahles durch die Laserbearbeitungsdüse (3) mit der ersten Umwandlungseinheit (9) im Inneren der Düse (3; 23) von Xₘᵢₙ bis Xₘₐₓ durchgeführt, und die Wärmestrahlenmaxima und das dazwischen liegende Wärmestrahlenminimum bestimmt wird; und dass das Anfahren des fokussierten Laserarbeitsstrahles durch die Laserbearbeitungsdüse (3) mit der ersten Umwandlungseinheit (9) im Inneren der Düse (3; 23)von Yₘᵢₙ bis Yₘₐₓ durchgeführt, sowie die Wärmestrahlenmaxima und das dazwischen liegende Wärmestrahlenminimum bestimmt wird, und dass zum Zentrieren die X- bzw. Y-Koordinaten des Zentrums der Düsenöffnung (4) in die X- bzw. Y-Koordinaten des Wärmestrahlenminimums verstellt werden.

12. Verfahren nach einem der vorhergehenden Ansprüche 9 bis 11, **dadurch gekennzeichnet, dass** der fokussierte Laserarbeitsstrahl, insbesondere CO2-Laserarbeitsstrahl, mit einer Wellenlänge von etwa 10,6 µm zu dem, für die InGaAs-Dioden als Wärmestrahlungssensoren (13) sichtbaren sekundären Wärmestrahl (10) mit Wellenlängen von etwa 1,0 - 2,2 µm umgewandelt wird.

## Claims

1. A laser processing machine (LM), with a laser processing head (1), having an interior (2) and a nozzle (3) with a nozzle opening (4) for allowing a primary beam (5), which is a focused laser working beam, to pass through onto a workpiece (6) to be processed and an alignment device (15) with a plurality of sensors (13) for centring the focused laser working beam (5) and the nozzle opening (4) relative to one another,
wherein, in the region of the nozzle opening (4), there is provided a first conversion unit (9), in particular a conversion edge for converting the lightly touching or impinging focused laser working beam (5) into a secondary heat beam (10) along a direction of propagation (10A) in the direction of the sensors (13),
wherein a glass pane (24) is arranged in front of each sensor (13) which is provided with a reflective layer for the focused laser working beam (5) on a surface transverse to the direction of propagation (10A),
**characterised in that**
the glass pane (24) is designed as a second conversion unit from long-wave IR of the focused laser working beam (5) to short-wave NIR,
wherein the sensors (13) are designed as thermal radiation sensors and are arranged in the interior (2) of the laser processing head (1) or the nozzle (3; 23) and the thermal radiation sensors (13) for monitoring the secondary thermal radiation (10) thus converted with wavelengths of approx. 1.0-2.2 µm are designed as InGaAs diodes.

2. The laser processing machine according to claim 1, **characterised in that** three thermal radiation sensors (13), offset by approx. 120° to each other, or four, offset by approx. 90°, are provided, which are arranged distributed in the interior (2) along the circumference of an inner lateral surface (17) of the laser processing head (1; 1b) and in particular in a plane which is normal to the nozzle axis (8) .

3. The laser processing machine according to claim 1 or 2, **characterised in that** a thermal radiation reflector (12) is arranged between the thermal radiation sensors (13) and the first conversion unit (9) for deflecting the secondary heat radiation (10) emitted by the conversion unit (9) along its direction of propagation (10A) onto one of the thermal radiation sensors (13).

4. The laser processing machine according to any one of claims 1 to 3, **characterised in that** the nozzle is a laser cutting nozzle (3) or a centring nozzle (23) replacing the same for the centring process and that the first conversion unit (9) is provided on an inner lateral surface (21) of the nozzle (3) or the centring nozzle (23) in the vicinity of the nozzle opening (4) as a projecting, optionally funnel-shaped, conversion edge which encloses an angle of inclination (20) in cross section of preferably approx. 4-7°, in particular approx. 5.5°, with a normal plane on a nozzle axis (8).

5. The laser processing machine according to any one of claims 1 to 4, **characterised in that** the conversion unit (9) itself is designed as a separate ring-shaped, in particular funnel-shaped or cone-shaped, element, which is attached to the inner lateral surface (21) of the laser processing nozzle (3) or to the inner lateral surface (22) of the additional centring element (23), is fixed coaxially with respect to the nozzle opening (4).

6. The laser processing machine according to any one of claims 1 to 5, **characterised in that** the conversion unit (9) consists of several non-contiguous conversion segments.

7. The laser processing machine according to any one of claims 1 to 6, **characterised in that** the conversion unit (9) is provided with a wear-resistant and/or conversion-accelerating coating.

8. The laser processing machine according to claim 1, **characterised in that** the glass pane (24) and the associated thermal radiation sensor (13) are arranged in a common holder (25) which is affixed in a recess (27) in the head part (1B).

9. A method for centring a primary beam (5), which is a focused laser working beam, with respect to a nozzle opening (4) of a laser processing head (1) of a laser processing machine (LM) according to any one of claims 1 to 8 relative to one another, wherein
a) an XY coordinate plane is defined in a normal plane on a nozzle axis (8) before or during laser processing,
b1) the first conversion unit (9) is provided in the interior of the nozzle (3; 23), at which a long-wave IR beam of the focused laser working beam (5) is converted into heat in order to produce short-wave NIR radiation into a secondary heat beam (10),
b2) the glass pane (24) is arranged in front of each sensor (13) as the second conversion unit, at which the long-wave IR of the focused laser working beam (5) is converted into short-wave NIR,
c) the focused laser working beam (5) is shifted relative to the nozzle opening (4) transversely to the XY coordinate plane, and thus transversely to the nozzle opening (4), until it hits the first conversion unit (9) where it is at least partially emitted as secondary thermal radiation (10) in the NIR range along a direction of propagation (10A), and
d) the sensors (13) designed as thermal radiation sensors are impinged on, and that each measured value of the thermal radiation sensors (13) determined by the secondary thermal beam (10) is assigned to associated XY coordinates of the nozzle axis (8) and to the focused laser working beam,
e) and that the respective position of the centre of the nozzle opening (4) relative to that of the laser working is calculated by a computer from multiple measured values according to c)-d) after multiple displacements, and
f) the centre of the nozzle opening (4) and the focused laser working beam are automatically displaced relative to one another for the purpose of centring.

10. The method according to claim 9, **characterised in that** a startup of the laser working beam is performed by the laser processing nozzle (3) with the first conversion unit (9) in the interior of the nozzle (3; 23) in three or four axial directions (X+; X-; Y+; Y-) of the XY coordinate plane.

11. The method according to claim 9 or 10, **characterised in that** the startup of the focused laser work beam is performed by the laser processing nozzle (3) with the first conversion unit (9) in the interior of the nozzle (3; 23) from Xₘᵢₙ to Xₘₐₓ, and the heat radiation maxima and the thermal radiation minimum therebetween are determined; and that the startup of the focused laser working beam is performed by the laser processing nozzle (3) with the first conversion unit (9) in the interior of the nozzle (3; 23) from Yₘᵢₙ to Yₘₐₓ, and the heat radiation maxima and the heat radiation minimum therebetween are determined, and that, for centring, the X or Y coordinates, respectively, of the centre of the nozzle opening (4) can be adjusted into the respective X or Y coordinates of the heat radiation minimum.

12. The method according to any one of the preceding claims 9 to 11, **characterised in that** the focused laser working beam, in particular the CO2 laser working beam, with a wavelength of approx. 10.6 µm is converted into the secondary thermal beam (10) with wavelengths of approx. 1.0-2.2 µm, which is visible for the InGaAs diodes as heat radiation sensors (13) .

## Revendications

1. Machine de traitement au laser (LM) comprenant une tête de traitement au laser (1), laquelle comporte un espace intérieur (2) et une buse (3) dotée d'un orifice de buse (4) pour permettre le passage d'un faisceau primaire (5), lequel est un faisceau de traitement au laser focalisé, sur une pièce (6) à traiter et un dispositif d'alignement (15) doté de plusieurs capteurs (13) pour centrer le faisceau de traitement au laser (5) focalisé et l'orifice de buse (4) l'un par rapport à l'autre,
dans laquelle, dans la zone de l'orifice de buse (4), une première unité de conversion (9), en particulier un bord de conversion pour convertir le faisceau de traitement au laser (5) focalisé effleurant ou frappant en un faisceau thermique (10) secondaire le long d'une direction de propagation (10A) dans la direction des capteurs (13), est située,
dans laquelle, devant chaque capteur (13), une vitre (24) est disposée, laquelle, sur une surface transversale à la direction de propagation (10A), est pourvue d'une couche réfléchissante pour le faisceau de traitement au laser (5) focalisé,
**caractérisée en ce que**
la vitre (24) est conçue sous la forme d'une seconde unité de conversion de l'IR à ondes longues du faisceau de traitement au laser (5) focalisé en NIR à ondes courtes, dans laquelle les capteurs (13) sont conçus sous la forme de capteurs de rayonnement thermique et sont disposés dans l'espace intérieur (2) de la tête de traitement au laser (1) ou de la buse (3 ; 23) et les capteurs de rayonnement thermique (13) sont conçus pour surveiller le rayonnement thermique (10) secondaire converti de cette manière présentant des longueurs d'onde d'environ 1,0-2,2 µm, sous la forme de diodes InGaAs.

2. Machine de traitement au laser selon la revendication 1, **caractérisée en ce que** trois capteurs de rayonnement thermique (13) décalés d'environ 120° ou quatre décalés d'environ 90° l'un par rapport à l'autre sont situés, lesquels sont situés dans l'espace intérieur (2) répartis le long de la circonférence d'une surface latérale intérieure (17) de la tête de traitement au laser (1 ; 1B) et, en particulier dans un plan normal à l'axe de la buse (8).

3. Machine de traitement au laser selon la revendication 1 ou 2, **caractérisée en ce qu'**entre les capteurs de rayonnement thermique (13) et la première unité de conversion (9) un réflecteur de faisceau thermique (12) est disposé pour dévier le rayonnement thermique (10) secondaire émis par l'unité de conversion (9) le long de sa direction de propagation (10A), sur l'un des capteurs de rayonnement thermique (13).

4. Machine de traitement au laser selon l'une quelconque des revendications 1 à 3, **caractérisée en ce que** la buse est une buse de découpe au laser (3) ou une buse de centrage (23) la remplaçant pour le processus de centrage et **en ce que** la première unité de conversion (9) est située sur une surface latérale (21) intérieure de la buse (3) ou la buse de centrage (23) à proximité de l'orifice de buse (4) sous la forme d'un bord de conversion en saillie, éventuellement en forme d'entonnoir, lequel, avec un plan normal sur un axe de buse (8) en coupe transversale, forme un angle d'inclinaison (20) de préférence d'environ 4 à 7°, en particulier d'environ 5,5°.

5. Machine de traitement au laser selon l'une quelconque des revendications 1 à 4, **caractérisée en ce que** l'unité de conversion (9) elle-même est conçue sous la forme d'un élément séparé annulaire, en particulier en forme d'entonnoir ou de cône, lequel est fixé à la surface latérale (21) intérieure de la buse de traitement au laser (3) ou à la surface latérale (22) intérieure de l'élément de centrage (23) supplémentaire coaxialement à l'orifice de buse (4).

6. Machine de traitement au laser selon l'une quelconque des revendications 1 à 5, **caractérisée en ce que** l'unité de conversion (9) est constituée de plusieurs segments de conversion non contigus.

7. Machine de traitement au laser selon l'une quelconque des revendications 1 à 6, **caractérisée en ce que** l'unité de conversion (9) est pourvue d'un revêtement résistant à l'usure et/ou accélérant la conversion.

8. Machine de traitement au laser selon la revendication 1, **caractérisée en ce que** la vitre (24) avec le capteur de rayonnement thermique (13) associé sont disposés dans un support commun (25), lequel est fixé dans un évidement (27) de la partie de tête (1B).

9. Procédé de centrage d'un faisceau (5) primaire, lequel est un faisceau de traitement au laser focalisé, sur l'orifice de buse (4) de la tête de traitement au laser (1) d'une machine de traitement au laser (LM) selon l'une quelconque des revendications 1 à 8, l'un par rapport à l'autre, dans lequel
a) avant ou pendant le traitement au laser, un plan de coordonnées X-Y est défini dans un plan normal sur un axe de buse (8),
b1) la première unité de conversion (9) est prévue à l'intérieur de la buse (3 ; 23), au niveau de laquelle un faisceau IR à ondes longues du faisceau de traitement au laser (5) focalisé est converti en chaleur, afin de produire un rayonnement NIR à ondes courtes d'un faisceau thermique (10) secondaire,
b2) devant chaque capteur (13), la vitre (24) est disposée en tant que seconde unité de conversion, au niveau de laquelle l'IR à ondes longues du faisceau de traitement au laser (5) focalisé est converti en NIR à ondes courtes,
c) le faisceau de traitement au laser (5) focalisé est décalé par rapport à l'orifice de buse (4) transversalement au plan de coordonnées X-Y et donc transversalement à l'orifice de buse (4), jusqu'à ce qu'il frappe la première unité de conversion (9) et soit là au moins partiellement émis en tant que rayonnement thermique (10) secondaire dans la plage NIR le long d'une direction de propagation (10A) et
d) frappe les capteurs (13) conçus sous la forme de capteurs de rayonnement thermique et que, à chaque valeur mesurée des capteurs de rayonnement thermique (13) déterminée par le faisceau thermique (10) secondaire, des coordonnées X-Y associées de l'axe de buse (8) et du faisceau de traitement au laser focalisé sont affectées,
e) et que, à partir d'une pluralité de valeurs mesurées selon les étapes c) et d) après un certain nombre de déplacements, à l'aide d'un ordinateur, la position respective du centre de l'orifice de buse (4) par rapport à celle du faisceau de traitement au laser est calculée et
f) le centre de l'orifice de buse (4) et le faisceau de traitement au laser focalisé sont automatiquement décalés l'un par rapport à l'autre dans le sens du centrage.

10. Procédé selon la revendication 9, **caractérisé en ce que** un démarrage du faisceau de traitement au laser est effectuée au moyen de la buse de traitement au laser (3) à l'aide de la première unité de conversion (9) dans l'espace intérieur de la buse (3 ; 23) dans trois ou quatre directions axiales (X+ ; X- ; Y+ ; Y-) du plan de coordonnées X-Y.

11. Procédé selon la revendication 9 ou 10, **caractérisé en ce que** le démarrage du faisceau de traitement au laser focalisé au moyen de la buse de traitement au laser (3) à l'aide de la première unité de conversion (9) dans l'espace intérieur de la buse (3 ; 23) est effectuée de Xₘᵢₙ à Xₘₐₓ et les maxima de faisceau thermique et le minimum de faisceau thermique entre les deux sont déterminés ; et que le démarrage du faisceau de traitement au laser focalisé au moyen de la buse de traitement au laser (3) à l'aide de la première unité de conversion (9) dans l'espace intérieur de la buse (3 ; 23) est effectuée de Yₘᵢₙ à Yₘₐₓ et les maxima de faisceau thermique et le minimum de faisceau thermique entre les deux sont déterminés et que pour le centrage, les coordonnées X ou Y du centre de l'orifice de buse (4) sont ajustées en coordonnées X ou Y du minimum du rayonnement de chaleur.

12. Procédé selon l'une quelconque des revendications 9 à 11 précédentes, **caractérisé en ce que** le faisceau de traitement au laser focalisé, en particulier le faisceau de traitement au laser de CO2, présentant une longueur d'onde d'environ 10,6 µm, est converti en le faisceau thermique (10) secondaire, visible pour les diodes InGaAs en tant que capteurs de rayonnement thermique (13), présentant des longueurs d'onde d'environ 1,0 à 2,2 µm.
